# EUROPEAN PATENT APPLICATION

(11) **EP 1 808 599 A2**
(43) Date of publication of application: **18.07.2007**
(21) Application number: 07250103.4
(22) Date of filing: 11.01.2007
(51) Int. Cl.: F03D 3/00, F03D 3/06

(54) **Vertical axis fluid actuated turbine**

(30) Priority: 11.01.2006 CA 2532597
(71) Applicant: Kneller, Maynard, Bjorkdale, SK S0E 0E0 (CA)
(72) Inventor: Kneller, Maynard, Bjorkdale, SK S0E 0E0 (CA)
(74) Representative: Church, Simon John

(57) **Abstract**

A vertical axis fluid-driven turbine includes opposing wings having auto-rotating blades. Airfoils on the blades rotate the blades along their longitudinal axis between a horizontal drag-minimizing position, and a vertical fluid-catching position, as the wings rotate in the horizontal plane about the vertical driveshaft.

## Description

### FIELD OF THE INVENTION

The present invention relates to a vertical axis fluid actuated turbine having auto-orienting blades.

### BACKGROUND OF THE INVENTION

A turbine is a device that converts the flow of a fluid (air, steam, water, or hot gases) into mechanical motion for generating electricity. Modem wind turbines are divided into two major categories: horizontal axis turbines and vertical axis turbines.

Horizontal axis wind turbines (HAWT) are the most common turbine configuration used today. Conventional HAWTs capture the wind's energy with two or three propeller-like blades, which are mounted on a rotor, to generate electricity. The turbines sit high atop towers, taking advantage of the stronger and less turbulent wind at 100 feet (30 meters) or more above ground. A blade acts much like an airplane wing. When the wind blows, a pocket of low-pressure air forms on the downwind side of the blade, creating lift. The low-pressure air pocket then pulls the blade toward it, causing the rotor to turn. The force of the lift is actually much stronger than the wind's force against the front side of the blade, which is called drag. The combination of lift and drag causes the rotor to spin like a propeller, and the turning shaft spins a generator to make electricity.

Conventional HAWTs are enormous structures, requiring significant structural engineering due to their height and the loads placed on the towers in high wind conditions. As a result, they are expensive to build and maintain.

Vertical axis wind turbines (VAWT) fall into two major categories: Savonius turbines and Darrieus turbines. The Darrieus turbine was invented in France in the 1920s. Darrieus turbines can be configured in an "eggbeater" shape, or in a large "H"-configuration, where vertical blades rotate into and out of the wind. Using aerodynamic lift, these turbines can capture more energy than drag devices. Although Darrieus turbines can capture more energy than drag devices, they suffer from a significant disadvantage in that they are unable to self-start. Therefore, an external energy source is required to bring them to minimum operating speed.

A Savonius turbine is S-shaped if viewed from above. This drag-type VAWT turns relatively slowly, but produces high torque. It is useful for grinding grain, pumping water, and many other physical tasks, but its slow rotational speeds are not good for generating electricity. It is relatively inefficient in converting wind energy.

Therefore, mere is a need in the art for a fluid driven turbine which allows for efficient operation and mitigates some difficulties presented by the prior art.

### SUMMARY OF THE INVENTION

In one aspect, the invention may comprise a fluid driven turbine where X, Y and Z axes are mutually orthogonal and the X axis is the direction of the fluid flow, said turbine comprising:
(a) a rotatable driveshaft, fixed substantially in the Z axis;
(b) at least one pair of opposed wings, wherein each wing comprises at least one elongate planar blade having a longitudinal axis and a planar transverse axis, wherein fluid-driven rotation of the wings in the X-Y plane causes the driveshaft to rotate, and wherein each blade may rotate about a substantially central longitudinal axis in the X-Y plane;
(c) wherein each blade comprises an elongate planar airfoil having a longitudinal axis and a planar transverse axis, affixed to a trailing edge of the blade, wherein the planar transverse axis of the airfoil is parallel to the planar transverse axis of the blade, and wherein the longitudinal axes of the airfoil and the blade are not parallel.

In another aspect, the invention may comprise a fluid driven turbine where X, Y and Z axes are mutually orthogonal and the X axis is the direction of the fluid flow, said turbine comprising:
(a) a rotatable driveshaft, fixed substantially in the Z axis;
(b) at least one pair of opposed wings, wherein each wing comprises at least one blade having a longitudinal edges, wherein fluid-driven rotation of the wings in the X-Y plane causes the driveshaft to rotate, and wherein each blade may rotate about a substantially central longitudinal axis in the X-Y plane;
(c) wherein each blade comprises a planar airfoil affixed to one longitudinal edge, said airfoil oriented such that wind action on the airfoil causes rotation of the blade around its longitudinal axis when the blade is substantially aligned with the X-axis.

The airfoil causes the blade to rotate into a substantially vertical (if the Z-axis is vertical) position when the wing is rotating into alignment with the X-axis, directed into the wind, and causes the blade to rotate into a substantially horizontal position when the wing is rotating into alignment with the X-axis in a downwind position.

### BRIEF DESCRIPTION OF THE DRAWINGS

The invention will now be described by way of an exemplary embodiment with reference to the accompanying simplified, diagrammatic, not-to-scale drawings. In the drawings:
Figure 1 is a top plan view of a basic embodiment of a wind turbine of the present invention.
Figure 2A is an end view of the blade in the 0° position. Figure 2B is an end view of the blade in the 180° position.
Figure 3A is a view of the windward side of a wing comprising a plurality of blades.
Figure 3B is a leeward side of the same wing. Figure 3C is a cross-section of a wing frame member.
Figure 4 is a side view of large wing comprising a plurality of blades and having a central support tower and suspension cables.

### DETAILED DESCRIPTION OF THE INVENTION

The present invention provides for a fluid driven turbine. When describing the present invention, all terms not defined herein have their common art-recognized meanings. To the extent that the following description is of a specific embodiment or a particular use of the invention, it is intended to be illustrative only, and not limiting of the claimed invention.

The turbines of the present invention may be wind or water driven. The turbine shown in the Figures and described below is adapted to be a wind turbine. The following description shall refer to three axes of direction: a Z-axis which defines the axis of rotation of the turbine, the X axis, which defines the direction of fluid movement, and the Y-axis, which is orthogonal to the perpendicular to X-axis and the Z-axis. In a typical wind turbine installation, the Z-axis may be vertical, and the X and Y-axes are horizontal.

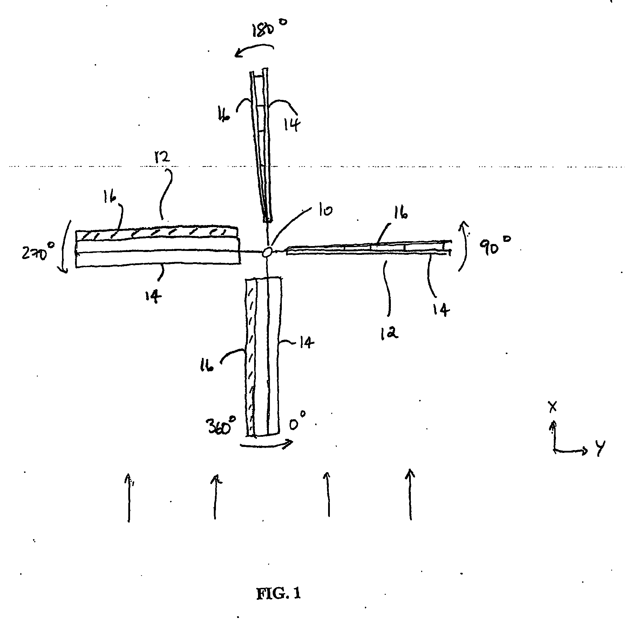

A wind turbine of the present invention comprises a central driveshaft (10) and at least one pair of opposed wings (12). As shown in Figure 1, the turbine may have two pairs of opposed wings. Wind energy causes the wings (12) to rotate about the driveshaft axis or the Z-axis. Each wing comprises at least one blade (14) which has an axis of rotation in the X-Y plane. Preferably, each blade has substantially equal surface area on either side of its axis of rotation and in one embodiment, each blade is substantially symmetrical about its axis of rotation. In the embodiment shown, each blade is rectangular, having length to height ratio of about 2.5. Each blade presents a drag-inducing surface to the wind when moving downwind, and which rotates to reduce or minimize drag when moving upwind. The difference in drag between the downwind wing and the upwind wing causes sustained rotation of the turbine.

Each blade (14) is caused to rotate about its axis of rotation by an elongate airfoil (16) attached to one longitudinal edge of the blade by a plurality of struts (18). The airfoil may extend the entire length of the blade, or only a partial length. The airfoil is substantially planar and is attached to the blade in an offset alignment, where the transverse axis of the airfoil is substantially parallel to the transverse axis of the blade, while the longitudinal axis of the airfoil forms an angle with the longitudinal axis with the blade. Thus the airfoil and the blade are not parallel.

When the blade is vertical as it is in the 90° and 180° positions in Figure 1, the transverse axes of the airfoil (16) and the blade (14) are both parallel to the Z-axis (vertical). However, when the blade is horizontal in the X-Y plane, as it is in the 270°and 360° positions in Figure 1, the transverse axes of the airfoil and the blade are both horizontal, perpendicular to the Z-axis.

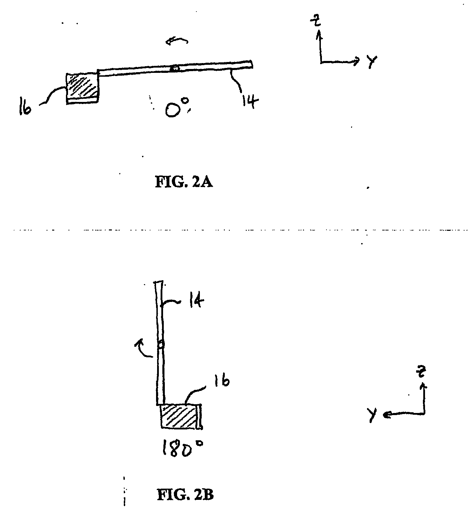

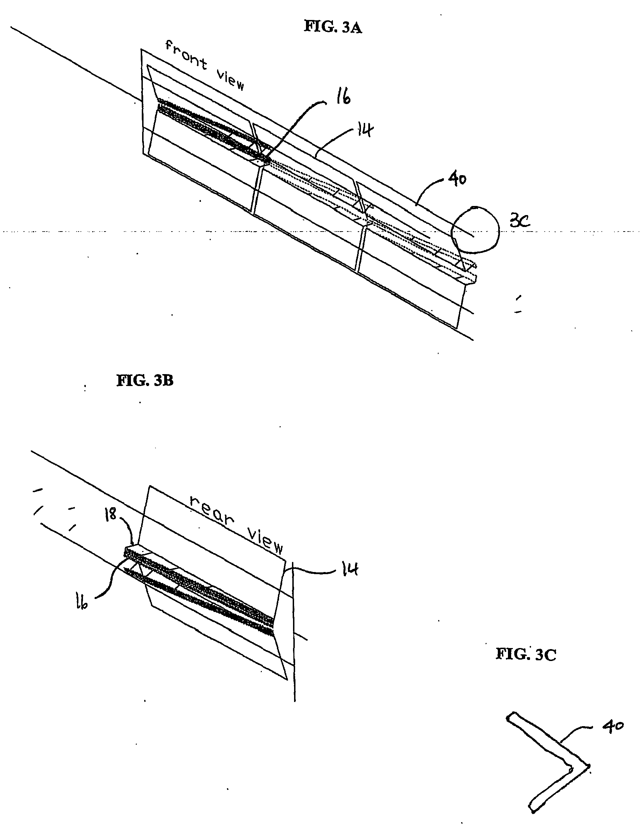

Each blade (14) is freely rotatable about its axis of rotation. The airfoil (16) causes the blade (14) to rotate to a substantially vertical wind-catching position when moving downwind, and to a substantially horizontal drag-minimized position when moving back upwind. The mechanism of action of the airfoil and blade is shown in Figures 2 and 3. For the purpose of this description, the point where the wing (12) is pointed directly into the wind (where its longitudinal axis is substantially parallel to the X-axis (wind direction) shall be referred to the 0° position. At this point, assuming the blades are horizontal or near horizontal at this time, it may be seen in Figure 2 that the airfoil presents a drag surface to the wind, which increases the pressure on the airfoil. Figure 2 shows an end view of the blade, looking from the wind direction. As a result, the blade rotates counterclockwise towards a vertical position. By the time the blade has rotated into a substantially vertical position, it now has rotated into a wind-catching position where its longitudinal axis is angular to the X-axis and swinging towards the Y-axis (90°). The major surface of the blade presents a drag surface to the wind and maintains that position because of the roughly equal forces on either side of the longitudinal axis of rotation of the blade.

As the blade approaches and passes the 180° position, the airfoil (16) again acts on the blade (14) to rotate the blade towards its horizontal position. As shown in Figure 3, showing an end view of the blade looking back into the wind, the airfoil causes the blade to rotate clockwise back to a horizontal position. The longitudinal edge (20) lacking the airfoil becomes the leading edge as the blade rotates towards the 270° position, while the longitudinal edge (22) with the airfoil becomes the trailing edge. The blade maintains this horizontal position as it rotates towards the 360° degree position, which is obviously the same as the 0° start position. The blade remains horizontal as it swings past the 270° position because the airfoil acts to stabilize the blade. As may be seen in Figure 2A, if the trailing edge rotates downwards, drag on the airfoil increases and exerts an upward force on the trailing edge. If the trailing edge rotates upwards, drag on the airfoil will then exert a downward force on the trailing edge.

As a result, the airfoil causes the blade to maintain a vertical wind-catching position from about 0° to about 180° and a horizontal drag-minimizing position from about 180° to about 360°. As the wings are mounted to the driveshaft as an opposed pair or pairs, the wings will continuously rotate in the presence of wind. Moreover, the turbine will self-start when a wind starts.

As shown in Figures 3A and 3B, in one embodiment, the blades of one wing are mounted in vertical pairs, in mirror-image configuration with the trailing edges of each blade adjacent each other. In the downwind position, this configuration results in a slight V-shape, with a small gap between each blade pair. The additional surface area presented by the airfoil causes the trailing edges of each blade to have more drag than the leading edge.

This configuration is believed to be more efficient than a single flat blade of equal dimensions in capturing wind energy. Preferably, the blades are mounted in wing frame made of a plurality of frame members (40). Each frame member may itself have a V-shaped transverse profile, pointed in the direction of travel of the wing, which assists in the wind-driven rotation of the turbine. Figure 3C shows a detail of a portion of Figure 3A, showing the V-shaped transverse profile of the frame member.

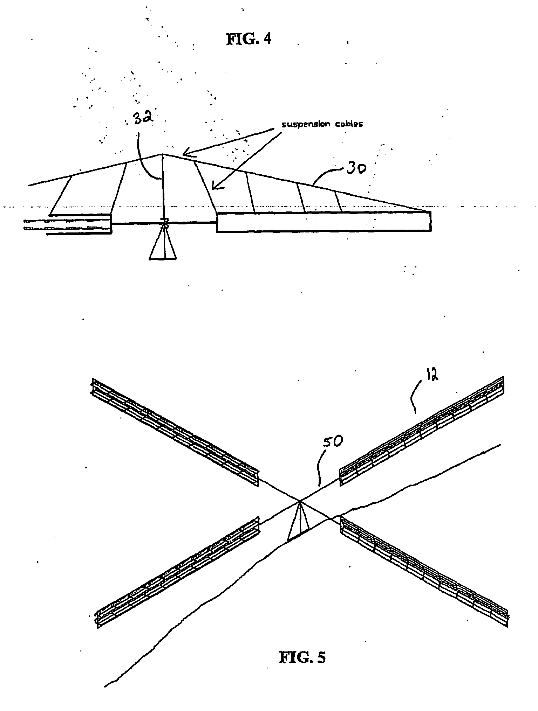

A plurality of paired blades may be mounted in a wing. In one embodiment, the paired blades extend horizontally outwards as shown in Figure 4. The wings may require support in the form of suspension cables (30) which outward from a central support tower (32). Alternatively, the wings may be supported by ground engaging tracks (not shown) around the entire rotational path of the wings.

In one embodiment shown in Figure 5, the turbine may have a central gap (50) between opposing wings. For example, in the embodiment shown, each wing assembly is 100 feet long and the gap is about 50 feet, making the overall length of two opposed wings 250 feet. The large gap in the centre of the unit makes the system more efficient. As the wing assembly starts into its power cycle, each wing redirects the airflow along the wing assembly inboard toward the hub of the turbine for a full 90 degrees of the power cycle (0°- 90°) and then of course for the last 90 degrees of the cycle (91°- 180°) the air flow is channelled toward the outboard portion of the wing. If the root or inboard end of the wing is affixed to the centre of the unit, with no gap, it then redirects the air flow or dumps air under pressure on to the opposite wing, which is undesirable. The gap prevents the interruption of air flow to the wing in the second quarter of the power cycle, and avoid directing air pressure to the wing on the return cycle.

The foregoing description is intended to cover all alternatives, modifications and equivalents that are included in the spirit and scope of the invention, as claimed herein.

## Claims

1. A fluid driven turbine where X, Y and Z axes are mutually orthogonal and the X axis is the direction of the fluid flow, said turbine comprising:
(a) a rotatable driveshaft, fixed substantially in the Z axis;
(b) at least one pair of opposed wings, wherein each wing comprises at least one elongate planar blade having a longitudinal axis and a planar transverse axis, wherein fluid-driven rotation of the wings in the X-Y plane causes the driveshaft to rotate, and wherein each blade may rotate about a substantially central longitudinal axis in the X-Y plane;
(c) wherein each blade comprises an elongate planar airfoil having a longitudinal axis and a planar transverse axis, affixed to a trailing edge of the blade, wherein the planar transverse axis of the airfoil is parallel to the planar transverse axis of the blade, and wherein the longitudinal axes of the airfoil and the blade are not parallel.

2. The apparatus of claim 1 wherein the pair of opposed wings rotate together in the X-Y plane, but each blade rotates independently along each blade's longitudinal axis.

3. The apparatus of claim 1 wherein each wing comprises a pair of blades, stacked in the Z-axis.

4. The apparatus of claim 3 wherein the blades are oriented in each blade pair such that the attached airfoils are adjacent each other.

5. The apparatus of claim 3 wherein each wing comprises a plurality of stacked blade pairs.

6. The apparatus of claim 1 wherein the Z-axis is substantially vertical.

7. A fluid driven turbine where X, Y and Z axes are mutually orthogonal and the X axis is the direction of the fluid flow, said turbine comprising:
(a) a rotatable driveshaft, fixed substantially in the Z axis;
(b) at least one pair of opposed wings, wherein each wing comprises at least one blade having a longitudinal edges, wherein fluid-driven rotation of the wings in the X-Y plane causes the driveshaft to rotate; and wherein each blade may rotate about a substantially central longitudinal axis in the X-Y plane;
(c) wherein each blade comprises a planar airfoil affixed to one longitudinal edge, said airfoil oriented such that the airfoil causes rotation of the blade around its longitudinal axis when the blade is aligned in the X-axis.
